# EUROPEAN PATENT APPLICATION

(11) **EP 4 693 542 A1**
(43) Date of publication of application: **11.02.2026**
(21) Application number: 24781092.2
(22) Date of filing: 19.03.2024
(51) Int. Cl.: H01M 10/04, B29C 65/00, H01M 50/105

(54) **PLASMA PROCESSING METHOD AND SECONDARY BATTERY MANUFACTURING METHOD COMPRISING SAME**

(30) Priority: 30.03.2023 KR 20230042329
(71) Applicant: LG Energy Solution, Ltd., Seoul 07335 (KR)
(72) Inventor: KIM, Wan Ju, Daejeon 34122 (KR); LEE, Ji Hoon, Daejeon 34122 (KR); KIM, Min Seok, Daejeon 34122 (KR)
(74) Representative: Goddar, Heinz J.
(86) International application number: PCT/KR2024/003403
(87) International publication number: WO 2024/205101

(57) **Abstract**

The present invention relates to a method for manufacturing a pouch-type secondary battery, and more specifically, relates to a plasma treatment method with improved sealing strength of a pouch, a method for manufacturing a secondary battery, and a manufacturing device thereof. According to one example of the present invention, it is possible to provide a pouch-type secondary battery comprising: a moving stage supporting a pouch before sealing and linearly moving the pouch in a first direction; a plasma generator discharging gas internally to form plasma gas; a plasma head irradiating the surface of the pouch with the plasma gas generated by the plasma generator to improve pouch sealing strength after sealing; and a delivery flow passage delivering the plasma gas generated by the plasma generator to the plasma head through a carrier gas.

## Description

### Technical Field

The present invention relates to a method for manufacturing a pouch-type secondary battery, and more specifically, relates to a plasma treatment method that can increase a sealing strength of a pouch, and improve insulation performance of the sealing, a method for manufacturing a secondary battery, and a manufacturing device thereof.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 to 37V) per unit cell among existing secondary batteries, and excellent energy densities, so that they can have characteristics optimized for mobile devices.

Lithium secondary batteries can be manufactured as pouch-type secondary batteries by encapsulating a battery cell with a pouch which is an aluminum encapsulation material.

The pouch-type secondary battery may comprise a battery cell accommodated in a pouch as an encapsulating material, a lead tab electrically connected to electrode tabs of electrodes provided in the battery cell to be drawn out to the outside of the pouch, and an insulating film electrically insulating the lead tab. Particularly, the pouch may perform a function of sealing the battery cell accommodated therein by heat-fusing the inner surface of the pouch with the insulating film formed on the lead tab of the battery cell, or directly heat-fusing the inner surface of the pouch with the inner surface of the pouch. The insulating film is generally a polypropylene (PP) film.

The pouch sealing performs a function of sealing a certain space accommodating an electrolyte inside the pouch. When the battery cell is repeatedly charged/discharged, gas is generated, whereby the pressure inside the pouch increases, and thus for this reason, the pouch sealing requires high strength.

Meanwhile, upon sealing the pouch by heat fusion, the polypropylene (PP) film is melted and spread to be bonded. The polypropylene film does not only bond the pouch, but also separates the metal layer of the pouch, such as aluminum, from the electrolyte, thereby preventing corrosion of the metal layer, and preventing current from flowing through the pouch and thus increasing resistance.

Korean Laid-Open Patent Publication No. 10-2022-0154638 (hereinafter, referred to as a "prior patent") discloses a method of manufacturing a pouch-type secondary battery for making the sealing surface of the pouch uniform. Particularly, to expect an effect capable of maintaining the uniformity of the sealing surface even in a wide temperature range or a wide pressure range, it discloses sealing the pouch after plasma treatment.

However, according to the prior patent, only the plasma surface treatment and the uniformity of the sealing surface are considered, but the sealing strength aspect is not considered, and particularly, conditions and timing of the plasma surface treatment, and heat fusion conditions are not disclosed. Therefore, there is a need to propose specific plasma surface treatment devices and processes that can improve the sealing strength of the pouch.

The manufacturing of pouch-type secondary batteries is performed mainly for mass production rather than small quantity production, and particularly, the entire process is performed sequentially, so that it is very important to increase process efficiency, that is, the number of good products that can be produced in unit time. Therefore, there is a need to provide plasma surface treatment devices and processes, which are easily constructed and controlled while being organically and easily integrated into the conventional pouch-type secondary battery manufacturing process and manufacturing device, and moreover, pouch-type secondary battery manufacturing devices and processes.

### Disclosure

### Technical Problem

The present invention is intended to increase sealing strength of a pouch in a pouch-type secondary battery.

Through one example of the present invention, it is intended to provide a manufacturing device and a manufacturing method of a pouch-type secondary battery that can be easily integrated into the conventional manufacturing device and manufacturing method of a pouch-type secondary battery.

Through one example of the present invention, it is intended to provide a manufacturing device and a manufacturing method of a pouch-type secondary battery that can continuously and organically plasma-treat the pouch surface.

Through one example of the present invention, it is intended to provide a pouch-type secondary battery having a sealing portion heat-fused after plasma treatment. Through this, it is possible to significantly reduce the matter in which sealing is ruptured due to gas generated internally and thus an electrolyte is leaked, whereby it is intended to provide a pouch-type secondary battery with improved lifespan and performance.

### Technical Solution

In order to achieve the above-described object, according to one example of the present invention, it is possible to provide a pouch-type secondary battery manufacturing device comprising: a moving stage supporting a pouch before sealing and linearly moving the pouch in a first direction; a plasma generator discharging gas internally to form plasma gas; a plasma head irradiating the surface of the pouch with the plasma gas generated by the plasma generator to improve pouch sealing strength after sealing; and a delivery flow passage delivering the plasma gas generated by the plasma generator to the plasma head through a carrier gas.

It is preferable that the plasma generator is positioned spaced apart from the plasma head, and both are connected through the delivery flow passage.

The moving stage may move linearly together with the pouch. Of course, the moving stage may be in the form of a roll, and may be provided to linearly move the pouch as it rotates.

The plasma head may be provided to be spaced apart in a second direction perpendicular to the first direction.

It is preferable that the plasma head is fixed, and provided to irradiate the surface of the pouch with the plasma gas downward in a vertical direction.

The moving stage may be provided to move the pouch at a constant speed.

The plasma head may be provided to irradiate the surface of the pouch moving while being supported by the moving stage with the plasma gas. It is preferable that the moving stage and the plasma head are positioned to face each other. When the moving stage is a roll supporting and transferring the pouch, that is, a transfer roll, it is preferable that the transfer roll and the plasma head are positioned to face each other. Therefore, smooth surface treatment may be possible as the plasma head irradiates the region where the pouch is supported with the plasma gas.

It is preferable that a gas for plasma discharge and the carrier gas are continuously supplied at a constant flow rate inside the plasma generator. Through this, the flow rate of the plasma gas irradiated to the pouch surface can be controlled constantly.

It is preferable that the gas discharged upon generating plasma in the plasma generator contains nitrogen (N₂).

It is preferable that the carrier gas is nitrogen. That is, only a portion of the supplied nitrogen is plasma-discharged, and nitrogen radicals may be supplied to the pouch surface by undischarged nitrogen. To this end, it is preferable that nitrogen flows into the plasma generator at a sufficient flow rate.

It is preferable that the flow rate of nitrogen flowing into the plasma generator is 100LPM to 250LPM.

It is preferable that the linear movement velocity of the pouch before sealing is 20mm/s to 60mm/s.

The gas for plasma discharge may be compressed-dry air (CDA), and the carrier gas may be nitrogen.

The compressed-dry air flowing into the plasma generator may have a flow rate of 0.7LPM.

Through this example, the plasma treatment intensity can be varied by adjusting the flow rate range of the supply gas and the pouch linear velocity range. Also, the plasma treatment intensity can be varied by adjusting the nitrogen flow rate range, the pouch linear velocity range, the presence or absence of CDA, and the CDA flow rate range. In addition, the plasma treatment intensity may also be adjusted through increase or decrease of the discharge power.

It is preferable that the pouch surface-treated using the plasma gas is sealed through heat fusion.

It is preferable that the heat fusion is performed for 1.5 seconds under 200 degrees Celsius and a pressure of 0.1MPa.

In order to achieve the above-described objects, according to one example of the present invention, it is possible to provide A method for manufacturing a pouch-type secondary battery comprising: a pouch supply step of continuously moving a pouch sheet on a moving stage; a plasma surface treatment step of irradiating the surface of the pouch sheet with plasma gas generated from a plasma generator through a plasma head; a casing step of forming a pouch case together with a battery cell by molding the plasma surface-treated pouch sheet; and a pouch sealing step of sealing the pouch case through heat fusion, and characterized in that the plasma gas moves from the plasma generator to the plasma head through a carrier gas to be irradiated to the pouch sheet.

In the pouch supply step, the pouch may be supplied in the form of a roll before being cut into unit pouches. Therefore, a pouch sheet, which is continuously supplied through the pouch sheet roll, can be continuously plasma-treated. Then, in the casing step, the pouch sheet is cut into unit pouches and forming is performed if necessary.

It is preferable that the plasma gas flows into the plasma head through a delivery flow passage provided between the plasma generator and the plasma head.

It is preferable that a gas for plasma discharge and the carrier gas are continuously supplied at a constant flow rate inside the plasma generator. Therefore, in terms of the plasma generator, it is preferable that the gas supply, the plasma discharge, and the plasma gas emission are performed simultaneously.

In addition, it is preferable that the plasma head irradiates the surface of the pouch moving while being supported by the moving stage with the plasma gas and the carrier gas. As the plasma head irradiates the region where the pouch is supported on the moving stage with the plasma gas, smooth surface treatment may be performed.

The gas discharged upon generating plasma in the plasma generator may contain nitrogen (N₂). The carrier gas may be nitrogen.

It is preferable that the flow rate of nitrogen flowing into the plasma generator is 100LPM to 250LPM.

It is preferable that the linear movement velocity of the pouch before sealing is 20mm/s to 60mm/s.

It is preferable that the pouch sealing step is performed within 5 minutes after the plasma surface treatment step.

It is preferable that a water contact angle on the surface of the pouch sheet after the plasma surface treatment is 41 degrees to 50 degrees.

### Advantageous Effects

According to the present invention, in a pouch-type secondary battery, it is possible to basically increase a sealing strength of the pouch.

Through one example of the present invention, it is possible to provide a manufacturing device and a manufacturing method of a pouch-type secondary battery that can be easily integrated into the conventional manufacturing device and manufacturing method of a pouch-type secondary battery.

Through one example of the present invention, it is possible to provide a manufacturing device and a manufacturing method of a pouch-type secondary battery that can continuously and organically plasma-treat the pouch surface.

Through one example of the present invention, it is possible to provide a pouch-type secondary battery having a sealing portion heat-fused after plasma treatment. Through this, it is possible to significantly reduce the matter in which sealing is ruptured due to gas generated internally and thus an electrolyte is leaked, whereby it is possible to provide a pouch-type secondary battery with improved lifespan and performance.

### Description of Drawings

Figure 1 represents a conceptual diagram of a pouch-type secondary battery manufacturing device according to one example of the present invention;
Figure 2 represents a development diagram of a unit pouch;
Figure 3 represents a manufacturing flow of a pouch-type secondary battery according to one example of the present invention;
Figure 4 represents a simplified diagram of a pouch-type secondary battery manufacturing device according to one example of the present invention;
Figure 5 represents water contact angle images of pouch surfaces;
Figure 6 represents a table of measured seal strength data;
Figure 7 represents a graph of measured sealing strength data;
Figure 8 represents sealing strength sampling locations in a pouch; and
Figure 9 represents a sampling method and dimensions in a pouch.

### Best Mode

Hereinafter, a pouch-type secondary battery manufacturing device according to one example of the present invention will be described in detail with reference to the attached drawings.

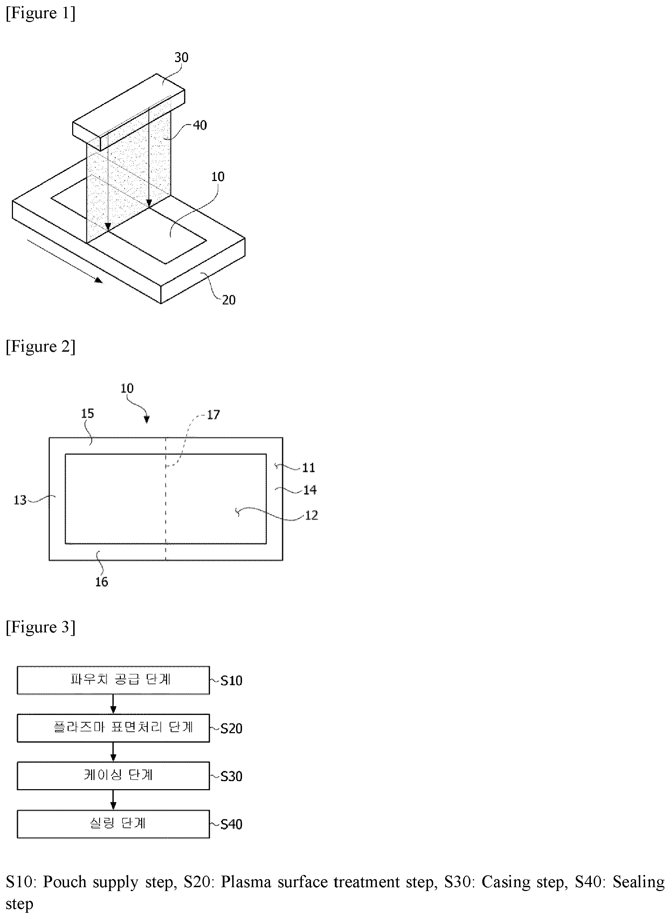

First, a device and a method plasma surface-treating a pouch will be described with reference to Figure 1.

The pouch 10 may be seated on a moving stage 20, and the moving stage 20 may be provided to linearly move the pouch in a first direction.

The pouch 10 may be linearly moved together with the moving stage 20, or only the pouch 10 may be linearly moved on the moving stage 20. Here, the pouch 10 is preferably moved in a horizontal direction. As one example, it is preferable that in a state where an upper surface facing a plasma head is maintained horizontally, it is moved in the pouch longitudinal direction (pouch supply direction).

The plasma head 30 may be provided at a location spaced apart from the moving stage 20. The plasma head 30 may be provided to supply plasma gas 40 to the surface of the pouch 10. The plasma head 30 may have a width corresponding to the width of the pouch 10. Therefore, it may be provided to supply the plasma gas 40 corresponding to the entire width of the pouch 10.

The plasma head may be positioned and fixed in a second direction perpendicular to the first direction. Therefore, the plasma gas 40 may be continuously supplied from the fixed plasma head, and the pouch 10 may continuously pass through a plasma section or region where the plasma gas 40 is supplied. In this instance, the plasma surface treatment is performed on the pouch 10.

The pouch 10 forms a seal accommodating a battery cell therein. Specifically, the sheet-shaped pouch 10 is cut and formed, and the facing edge surfaces of the pouch are heat-sealed to seal the battery cell inside.

According to this example, the plasma surface treatment can be performed not only on the edge surface of the pouch that is heat-fused and sealed, but also on the inner surface of the pouch that is in close contact with the battery cell. That is, according to this example, the pouch on which the plasma surface treatment is performed may be a pouch before sealing and simultaneously a pouch sheet before cutting and forming for forming a seal.

When the pouch sheet is subjected to plasma surface treatment, the pouch sheet can be easily plasma surface-treated continuously and automatically. Particularly, only a portion of the pouch, especially the sealing portion is not plasma surface-treated, so that the subsequent processes can be very simple. As one example, when the plasma surface treatment is performed on four edge surfaces of a square pouch, continuous plasma surface treatment is not easy.

As shown in Figure 2, a single pouch 10 forming a single pouch-type secondary battery may be cut from a pouch sheet to form a rectangular thin sheet.

The pouch sheet may be formed by providing a polypropylene layer on the outer and inner surfaces of a thin aluminum plate. That is, when an encapsulating material is formed with the pouch sheet, the polypropylene outer surface forms the outer surface of the pouch and the polypropylene inner surface forms the outer surface of the pouch, whereby the thin aluminum plate is not exposed to external air and an internal electrolyte.

As shown, the edge surfaces 13, 14, 15, 16 of the single pouch 10 may form a sealing region 11. A cell region 12 where a battery cell closely contacts and an electrolyte is filled may be formed in the inner side region of the sealing region 11.

A folded portion 17 may be formed in the middle of the cell region 12, and after the battery cell is seated in the cell region 12 on any one of both sides of the folded portion, the left and right cell regions 12 and sealing regions 11 may be overlapped around the folded portion. Thereafter, the pouch sealing is performed through heat fusion of the sealing region 11.

In the case where there is no folded portion, the unit pouch 10 shown in Figure 2 may be an upper casing and a lower casing of a pouch casing. Since the upper casing and the lower casing are positioned to face each other, and then sealed, the sealing region 11 appears in the same aspect. However, if there is a folded portion, the sealing is unnecessary due to the folded portion, so that the sealing may be performed on three-line segments; and if there is no folded portion, the sealing may be performed on four-line segments.

If only the sealing region 11 shown in Figure 2 is subjected to plasma surface treatment, it can be known that the plasma surface treatment process becomes very complicated. First, the left and right edge surfaces 13, 14 must be intermittently plasma-treated, and then after rotating the pouch 10 90 degrees, the upper and lower edge surfaces 15, 16 must be intermittently plasma-treated. Therefore, at least two plasma heads are needed, and the widths of the plasma heads may also be different from each other.

Ultimately, when only the sealing region 11 is subjected to plasma surface treatment, the plasma control is not easy and the device also becomes complicated. Particularly, the plasma surface treatment must be performed uniformly throughout the sealing region 11, but non-uniform plasma treatment regions may occur on the edge surfaces at the corners. This is because rotation of the pouch 10 is necessary when the plasma treatment is subjected to the entire sealing region 11. At this time, the plasma surface treatment may not be performed on some portions and the plasma surface treatment may also be overlapped on some portions.

In addition, when only the sealing region 11 is subjected to plasma surface treatment, it must be performed after cutting the sheet-shaped pouch. This is because the traveling direction of the pouch with respect to the plasma treatment device must be changed. Therefore, it is not easy to plasma surface-treat the pouch sheet while transporting it in the roll-to-roll (R-to-R) form.

Meanwhile, according to one example of the present invention, only one side of the pouch corresponding to the inner surface of the pouch is plasma surface-treated, and then sealed, and the plasma surface treatment may be unnecessary for one side of the pouch corresponding to the outer surface of the pouch.

According to one example of the present invention, there is no need to change the position of the pouch, and particularly, the number of plasma heads can be reduced. As one example, it is possible to allow the sheet-shaped pouch to pass continuously through a single plasma head. Particularly, as shown in Figure 2, the plasma treatment can be performed on the entire pouch without dividing it into a sealing region 11 and a cell region 12. That is, the plasma surface treatment can be performed very easily on the entire polypropylene coating layer corresponding to the inner surface of the pouch.

Ultimately, according to this example, the plasma treatment is performed on the entire one side of the pouch sheet before cutting into single pouches and before sealing, thereby enabling very effective and easy device configuration and control logic.

Hereinafter, a secondary battery manufacturing method according to one example of the present invention will be described in detail with reference to Figure 3.

The manufacturing process of a pouch-type secondary battery includes an electrode process, an assembly process, and a formation process, where it can be said that this example specifically relates to the assembly process.

First, a pouch forming a seal, that is, a case of a pouch-type secondary battery may be provided (S10). That is, a pouch supply step may be performed. Here, it is preferable that the pouch is a sheet-shaped pouch. Therefore, the pouch may be continuously moved on a moving stage using the roll-to-roll. Here, the moving stage may also be a horizontal plane-shaped stage or a roll-shaped stage. Here, it is preferable that the pouch sheet is a pouch sheet roll before cutting rather than a cut pouch for manufacturing a single pouch-type battery.

The plasma surface treatment is performed on the supplied pouch sheet (S20). That is, a plasma surface treatment step may be performed. As described above, the plasma surface treatment may be performed by continuously irradiating the surface of the pouch sheet with plasma gas from a plasma head. In this instance, it is preferable that the plasma head irradiates plasma gas substantially over the entire width of the pouch sheet. Therefore, as the pouch sheet passes through the plasma head at a constant speed, the plasma treatment may be performed on substantially the entire surface of the pouch sheet. Of course, the surface herein means a surface forming the inner surface of the pouch case later, the plasma treatment on the surface forming the outer surface of the pouch case later may be meaningless.

After the plasma treatment on the pouch sheet is completed, the pouch sheet is molded to form a pouch case together with the battery cell (S30). That is, a casing step may be performed. Specifically, a roll-shaped pouch sheet may be cut into unit pouches. A pouch case may be formed after the battery cell is in close contact with the cut unit pouch. At this time, to insert the battery cell, the pouch may be formed to form a space into which the battery cell is inserted. The unit pouch may be in a form where the upper case and the lower case of the pouch case are connected through a folded portion, or each of the upper case and the lower case separated from each other may also be referred to as the unit pouch.

After the pouch case, in which the battery cell is accommodated therein, is formed, the pouch case may be sealed (S40) through heat fusion. That is, a pouch sealing step may be performed. Here, the pouch sealing may be performed excluding a path through which an electrolyte may be injected into the pouch case. Then, after the electrolyte injection is performed, injecting opening sealing may be further performed.

Hereinafter, the plasma surface treatment method and configuration according to this example will be described in detail.

Generally, the plasma treatment technology means direct plasma. Radicals, ions, and electrons in the plasma all act on a sample, and have high energy, whereby they easily break molecular bonds and form new bonds. When this corresponds to the plasma surface treatment of the pouch, it means that the pouch is placed in the plasma generation space. That is, as shown in Figure 1, this means that the plasma head 30 and the moving stage 20 perform positive electrode and negative electrode functions, respectively. The plasma gas is generated by applying an alternating current voltage between the plasma head 30 and the moving stage 20 and discharging the gas, and the generated plasma gas affects the pouch surface.

However, it is not easy to integrate the direct plasma treatment technology into the pouch plasma treatment. This is because it is not easy to provide an electrode function to the stage, especially the moving stage 20. This is because the moving stage moves linearly or rotates. In addition, it is not easy to continuously supply pouches to a space where the plasma is directly generated.

According to this example, the pouch may be plasma-treated using indirect plasma rather than direct plasma. Here, the indirect plasma, unlike the direct plasma, means that the plasma generation space and the sample are located at different spaces. In other words, the indirect plasma means that the pouch and the electrode are located at separate spaces.

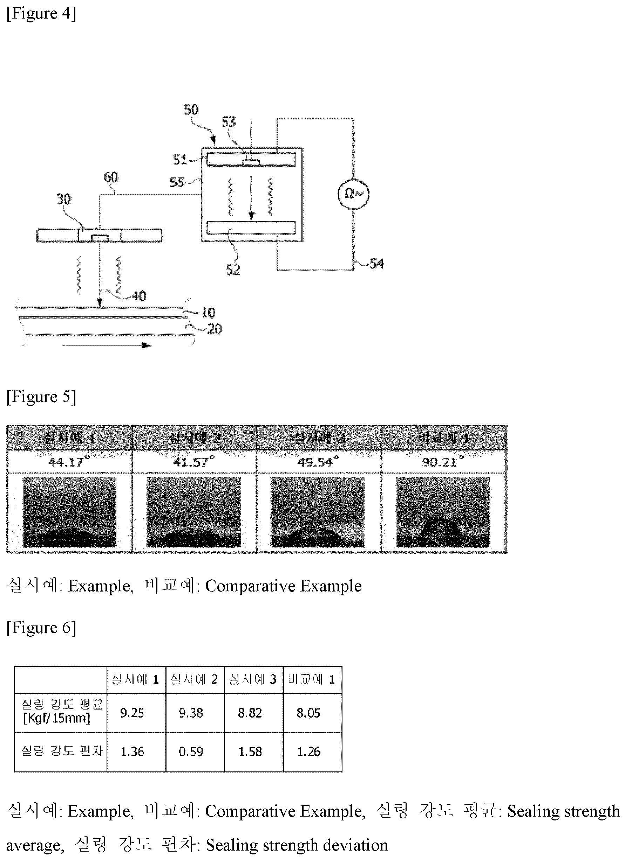

As shown in Figure 4, the plasma generator 50 may comprise a chamber 55, and a negative electrode 51 and a positive electrode 52 facing each other may be provided in the chamber 55. The positions of the negative electrode and the positive electrode may be changed. The positive electrode 51 and the negative electrode 52 may be connected to an alternating current power supply 54 to provide power for plasma generation.

A nozzle or inlet 53 injecting gas into the chamber 55 is provided. The plasma discharged gas and the carrier gas may be injected into the chamber 55 through the inlet 53. The plasma discharged gas and the carrier gas may be different gases, or may also be the same gas.

When using the indirect plasma, there is no damage to the sample surface due to high power because the electrodes are in separate spaces, so that it is easy to turn the desired gas into plasma. However, the plasma generated by electrical energy returns to a stable state the moment the energy supply is cut off, so that a large amount of carrier gas is required to quickly deliver it to the sample. Among the ions, electrons, and radicals generated by plasma discharge, only radicals with high chemical reactivity reach the sample through the carrier gas, thereby reducing damage from physical collisions.

To supply the radicals generated in the chamber 55 to the plasma head 30, it is preferable that a delivery flow passage 60 is provided between the chamber 55 and the plasma head 30. Due to the high pressure and high flow rate of the carrier gas supplied inside the chamber 55, the plasma gas, that is, the radicals, are supplied to the plasma head 30 through the delivery flow passage along with the carrier gas. The plasma gas supplied to the plasma head 30 may be radiated to the pouch surface along with the carrier gas.

Eventually, it can be known that after the plasma treatment, radicals and the like react with the pouch surface made of polypropylene, thereby increasing the surface energy, and later, when melted due to high temperature, cohesion force occurs between different surfaces, whereby it is in a state that the sealing facilitates.

To verify the effect of improving the sealing strength of the pouch using the indirect plasma, the following examples and comparative examples were conducted.

### - Example 1-

Nitrogen (N₂) gas of 250LPM and CDA (compressed-dry air) of 0.7LPM were continuously sprayed with the plasma generator 50, and the gas was discharged with a power of 8.0kW to form plasma. The plasma was sprayed through the plasma head 30 provided on the outside of the plasma generator 50 according to the gas flow rate, and the pouch 10 passed through the spray section at a linear speed of 20mm/s. Afterwards, the pouch plasma surface-treated for 1.5 seconds under conditions of a temperature of 200 degrees Celsius and a pressure of 0.1MPa was heat-pressed to perform pouch sealing by heat fusion. Since the surface treatment effect of plasma has changes over time, the heat-pressing was performed within 5 minutes after the plasma surface treatment. The substantial plasma discharge gas is CDA, and the substantial carrier gas is nitrogen.

### - Example 2

Without using CDA, N₂ gas was supplied at 200LPM, and the linear speed of the pouch was set to 60mm/s. Except for these, the conditions are the same as in Example 1. The nitrogen is both a plasma discharge gas and a carrier gas. A portion of the supplied nitrogen is plasma-discharged.

### - Example 3

The conditions are the same as in Example 2, except that N₂ gas is supplied at 100LPM. The nitrogen is both a plasma discharge gas and a carrier gas. A portion of the supplied nitrogen is plasma-discharged.

### - Comparative Example 1

The heat fusion sealing conditions are the same as in Example 1 without any plasma treatment.

Looking at Examples 1 to 3, it can be known that the plasma surface treatment is changed through changes in the flow rate of the supply gas and/or the linear speed of the pouch. It can be known that the higher the flow rate of the supply gas and the slower the pouch linear speed, the higher the intensity of the plasma surface treatment. In addition, it can be known that the intensity of plasma surface treatment increases through whether CDA is supplied or not and the supply amount of CDA, which is easy to plasma discharge.

Figure 5 shows water contact angles and water contact images in each of Examples 1 to 3 and Comparative Example 1. The water contact angle was measured as a method for determining the surface-treated degree of the pouch and indirectly observing the surface energy.

As shown, it can be known that in all the examples performing the plasma surface treatment, the water contact angles are smaller than that of Comparative Example 1. It can be expected that the sealing strength can be improved through increase of adhesive physical properties by allowing to have the water contact angle approximately in a range of 41 degrees to 50 degrees. That is, it can be known that the polypropylene of the surface modified through the plasma surface treatment has polarity and generates intermolecular cohesion force, whereby the sealing strength can be improved.

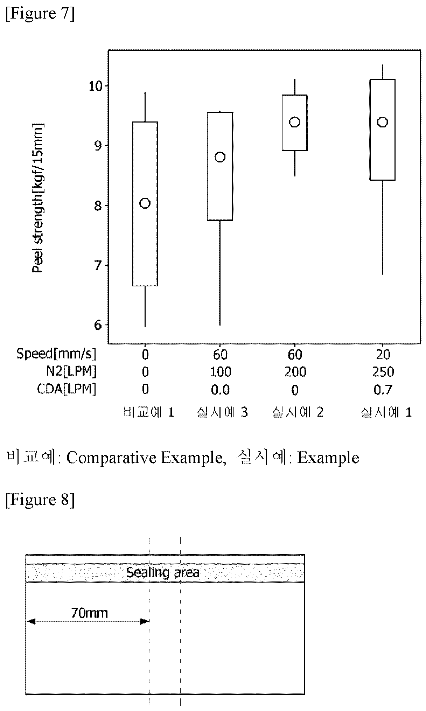

Figure 6 is a sealing strength average and deviation table of sealing strengths measured in each of Examples 1 to 3 and Comparative Example 1, and Figure 7 is a graph of sealing strengths measured in each of Examples 1 to 3, and Comparative Example 1.

As shown in Figures 6 and 7, it can be known that the average sealing strength has been improved in all three examples compared to Comparative Example 1. That is, it can be known that an average sealing strength improvement effect can be expected through the indirect plasma. However, in the case of Examples 1 and 3, the sealing strength deviation has increased compared to Comparative Example 1, so that it is difficult to say that the strength has been statistically improved. However, since both lower limits of the sealing strengths peel strengths in Examples 1 and 2 are greater than 7 kgf/15mm, it can be known that sufficient sealing strengths can be obtained.

Then, even if the CDA is excluded from the gas composition, the sealing strength increase can be obtained as can be seen in Examples 2 and 3, and particularly, it can be known that the highest sealing strength and small deviation can be obtained in Example 2.

Therefore, through Examples 1 to 3, it can be known that in the indirect plasma surface treatment, the sealing strength of the pouch can be obtained very effectively in the nitrogen supply flow rate range, the pouch linear velocity range, and the CDA presence or absence and flow rate range.

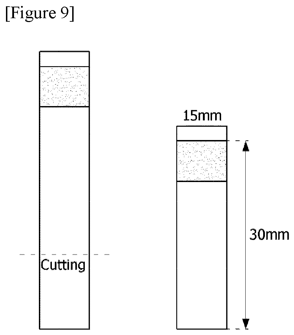

Figure 8 shows the sampling acquisition position in the sealed pouch, and Figure 9 shows the sampling method and sampling dimensions for measuring the sealing strength.

First, the sampling can be obtained by cutting the pouch in a dotted line portion, as shown in Figure 8, and cutting the dotted line portion, as shown in Figure 9. Since the pouches are overlapped up and down, the sealing strength can be measured by pulling the upper pouch in a state where the lower pouch is fixed.

The sealing strength of the sealed pouch was measured by using the tensile strength measurement function of a universal testing machine (UTM) to measure the force from the sampling to the sealing rupture. The UTM was operated to break the sealing at a constant speed of 5mm/min, and the average of the force measured up to 8mm after the 4.5kgf measurement point was recorded.

### Industrial Applicability

It is described in the Detailed Description of Invention.

## Claims

1. A pouch-type secondary battery manufacturing device comprising:
a moving stage supporting a pouch before sealing and linearly moving the pouch in a first direction;
a plasma generator discharging gas internally to form plasma gas;
a plasma head irradiating the surface of the pouch with the plasma gas generated by the plasma generator to improve pouch sealing strength after sealing; and
a delivery flow passage delivering the plasma gas generated by the plasma generator to the plasma head through a carrier gas.

2. The pouch-type secondary battery manufacturing device according to claim 1, **characterized in that**
the plasma head is provided to be spaced apart from the moving stage in a second direction perpendicular to the first direction.

3. The pouch-type secondary battery manufacturing device according to claim 2, **characterized in that**
the plasma head is fixed, and provided to irradiate the surface of the pouch with the plasma gas downward in a vertical direction.

4. The pouch-type secondary battery manufacturing device according to claim 3, **characterized in that**
the moving stage is provided to move the pouch at a constant speed, and the plasma head irradiates the surface of the pouch moving while being supported by the moving stage with the plasma gas.

5. The pouch-type secondary battery manufacturing device according to claim 1, **characterized in that**
a gas for plasma discharge and the carrier gas are continuously supplied at a constant flow rate inside the plasma generator.

6. The pouch-type secondary battery manufacturing device according to claim 5, **characterized in that**
the gas discharged upon generating plasma in the plasma generator contains nitrogen (N₂).

7. The pouch-type secondary battery manufacturing device according to claim 6, **characterized in that**
the carrier gas is nitrogen.

8. The pouch-type secondary battery manufacturing device according to claim 7, **characterized in that**
the flow rate of nitrogen flowing into the plasma generator is 100LPM to 250LPM.

9. The pouch-type secondary battery manufacturing device according to claim 8, **characterized in that**
the linear movement velocity of the pouch before sealing is 20mm/s to 60mm/s.

10. The pouch-type secondary battery manufacturing device according to claim 5, **characterized in that**
the gas for plasma discharge is compressed-dry air (CDA), and the carrier gas is nitrogen.

11. The pouch-type secondary battery manufacturing device according to claim 10, **characterized in that**
the compressed-dry air flowing into the plasma generator has a flow rate of 0.7LPM.

12. The pouch-type secondary battery manufacturing device according to claim 5, **characterized in that**
the surfaces of the pouches surface-treated using the plasma gas are overlapped with each other, and then heat-fused to seal them.

13. The pouch-type secondary battery manufacturing device according to claim 12, **characterized in that**
the heat fusion is performed for 1.5 seconds under 200 degrees Celsius and a pressure of 0.1 MPa.

14. A method for manufacturing a pouch-type secondary battery comprising:
a pouch supply step of continuously moving a pouch sheet on a moving stage;
a plasma surface treatment step of irradiating the surface of the pouch sheet with plasma gas generated from a plasma generator through a plasma head;
a casing step of forming a pouch case together with a battery cell by molding the plasma surface-treated pouch sheet; and
a pouch sealing step of sealing the pouch case through heat fusion, and
**characterized in that** the plasma gas moves from the plasma generator to the plasma head through a carrier gas to be irradiated to the pouch sheet.

15. The method for manufacturing a pouch-type secondary battery according to claim 14, **characterized in that**
a gas for plasma discharge and the carrier gas are continuously supplied at a constant flow rate inside the plasma generator, and
the plasma head irradiates the surface of the pouch moving while being supported by the moving stage with the plasma gas and the carrier gas.

16. The method for manufacturing a pouch-type secondary battery according to claim 15, **characterized in that**
the gas discharged upon generating plasma in the plasma generator contains nitrogen (N₂).

17. The method for manufacturing a pouch-type secondary battery according to claim , **characterized in that**
the carrier gas is nitrogen.

18. The method for manufacturing a pouch-type secondary battery according to claim 17, **characterized in that**
the flow rate of nitrogen flowing into the plasma generator is 100LPM to 250LPM.

19. The method for manufacturing a pouch-type secondary battery according to claim 18, **characterized in that**
the linear movement velocity of the pouch before sealing is 20mm/s to 60mm/s.

20. The method for manufacturing a pouch-type secondary battery according to claim 14, **characterized in that**
a water contact angle on the surface of the pouch sheet after the plasma surface treatment is 41 degrees to 50 degrees.
